# EUROPEAN PATENT SPECIFICATION

(11) **EP 3 409 593 B1**
(45) Date of publication and mention of the grant of the patent: **18.11.2020**
(21) Application number: 18163869.3
(22) Date of filing: 26.03.2018
(51) Int. Cl.: B64G 1/22, F03G 7/06

(54) **ROTATIONAL DRIVE FOR A SATELLITE COMPONENT, HAVING HEAT-CONTROLLED DRIVE CHARACTERISTICS**
DREHANTRIEB FÜR EIN SATELLITENBAUTEIL MIT WÄRMEREGULIERTER ANTRIEBSCHARAKTERISTIK
ENTRAÎNEMENT ROTATIF POUR UN COMPOSANT SATELLITE PRÉSENTANT DES CARACTÉRISTIQUES D'ENTRAÎNEMENT THERMORÉGULÉ

(30) Priority: 01.06.2017 DE 102017209343
(43) Date of publication of application: 05.12.2018
(73) Proprietor: Airbus Defence and Space GmbH, 82024 Taufkirchen (DE)
(72) Inventor: Rieger, Sebastian, 88709 Hagnau (DE); Barho, Reiner, 88682 Salem (DE); Häberlein, Thomas Matti, 85653 Aying (DE)
(74) Representative: Schicker, Silvia

(56) References cited:
- EP-A1- 0 496 183
- KR-A- 20140 125 889
- US-A- 5 975 468
- US-A1- 2002 069 941

## Description

The invention relates to a rotational drive for a satellite component, and a method for rotationally driving a satellite component.

Rotational drives are used for various purposes in satellites. The opening and/or closing of closure or changeover flaps used in optical aerospace instruments of a satellite is mentioned as an example. Thus far, electronic drives have usually been used for this purpose. Electronic drives of this type include a control electronics system which is not always reliable, and may reach a comparatively high weight.

The object of the present invention, therefore, is to provide a rotational drive with which improvements regarding the complexity, weight, and/or reliability during use may be achieved.

This object is achieved by a rotational drive according to Claim 1, and a method according to Claim 10.

A rotational drive for a satellite component includes, among other features, a drive shaft which is rotatable about a rotational axis and which is coupleable or coupled to a satellite component. The drive shaft may have an essentially cylindrical design or may include at least one cylindrical main part. The rotational axis may extend in parallel to a longitudinal axis of the drive shaft, or coincide with same.

Unless it is stated otherwise or is apparent, within the scope of the present disclosure the term "coupling" encompasses a mere indirect coupling as well as a direct coupling, for example in the form of a direct fastening.

The satellite component may include an optical aerospace instrument or may be included by same. The satellite component may include at least one movable flap, in particular a closure or changeover flap. These types of flaps may be an integral part of an optical aerospace instrument or may cooperate with same.

The rotational drive also includes at least one first actuator element that is coupled to the drive shaft, for example directly fastened thereto. The actuator element may generally have an elongated design, for example a wire- and/or string-shaped design.

Furthermore, the actuator element includes a shape memory material. Such materials are known in the prior art, for example in the form of so-called shape memory alloys (in particular nickel-titanium alloys). The shape memory material may be heat- or temperature-activatable. In other words, the shape memory material may return to its original shape according to a heating level of the actuator element, which may result in a change in length of the actuator element, for example in the manner explained below.

In this regard, the shape memory material (prior to installation in the rotational drive) may be pseudoplastically deformed, and begins to return to its original shape no later than upon reaching the predetermined heating level. The pseudoplastic deformation may include stretching or lengthening of the actuator element, and preferably takes place with exertion of tensile forces on the actuator element. In other words, the actuator element may include a pre-lengthened shape memory wire or may be made of same.

The actuator element may thus initially be situated in the rotational drive in a (pseudoplastically) deformed state and coupled to the drive shaft, wherein the actuator element in this state may in particular have extended dimensions (for example, a length that is increased by stretching/tensile forces). The material structure of the shape memory material may be detwinned in a known manner in order to provide the shape memory effect. In addition, initially the pseudoplastic deformation may essentially remain when there is little or no heating.

The pseudoplastic deformation may subsequently be reversed according to a heating level of the actuator element, and in particular upon reaching an activation temperature or an activation heating level. As a result, the actuator element may then begin to return to its original shape. As described, this may encompass a return to an unstretched state, for example a corresponding shortening and/or compression of the actuator element.

However, it is understood that in principle the reverse case is also conceivable, in which the actuator element is pseudoelastically deformed under compression or pressure forces, and is subsequently relengthened as the result of heating. If multiple actuator elements are present, it may also be provided that these are designed according to any of the mentioned variants; for example, one actuator element may become longer when heated while another actuator element becomes shorter, or both actuator elements may become shorter when respectively heated.

The shape memory material may generally be designed to undergo one or more reversible changes in shape. In particular, for a non-activating starting temperature and/or starting heating level, the shape memory material may assume a nonrotationally-active state (for example, a lengthened state). In contrast, upon reaching the described activation temperature or the activation heating level, the actuator element may cooperate with the drive shaft in a rotationally-active manner (for example, by assuming a correspondingly shortened state). As the result of cooling, the shape memory material may experience, at least to a small extent, reverse deformation due to hysteresis effects (for example, it may slightly relengthen).

However, as explained below, after activation the shape memory material may also be elastically deformed and thus brought back into its nonrotationally-active state. For example, in the cooled state the shape memory material may be relengthened or restretched with elastic deformation. If the shape memory material is then reactivated by heating, it may once again become shorter in the described manner in order to rotate the drive shaft. Such a cycle of heating (or activation), cooling, and elastic deformation may be run through multiple times to allow the satellite component to be repeatedly activated. As described, according to one variant this cycle may include shortening by heating, cooling under material-dependent hysteresis effects, and renewed lengthening due to elastic deformation.

As already indicated, the actuator element is changeable in length according to a heating level of the shape memory material. In particular, the actuator element may shorten and/or contract due to heating. As the result of hysteresis effects, the shape memory material may at least slightly lengthen and/or expand due to cooling. However, an inverse relationship is also conceivable (lengthening upon heating, shortening upon cooling).

The actuator element may include a first end section that is coupled or coupleable to a stationary element, and a second end section that is coupled to the drive shaft. The first and second end sections may be situated opposite one another, in particular along a longitudinal axis of the actuator element. The stationary element may be an element within the rotational drive, or an element in the surroundings of the rotational drive (for example, an adjoining wall area, a mounting, or the like). The stationary element may generally form a fixed bearing, whereas the drive shaft may form a movable bearing.

Additionally or alternatively, the actuator element may have a first section that may include at least a portion of the shape memory material, and a second section that is coupled to the drive shaft, in particular in a position situated at a distance from the rotational axis. The first and second sections may be situated in succession, in particular along a longitudinal axis of the actuator element. The first section may be composed completely of the shape memory material and/or be formed from same. In general, the first section cannot be, or be brought, in contact with the drive shaft, at least in a middle position of the rotational drive, explained below.

In principle, the second section may likewise include a portion of the shape memory material, but preferably is made of non-shape memory materials. For example, the second section may be formed by a cable, string, yarn, or thread element. The second section may be fastened to the drive shaft. The coupling of the second section and the drive shaft may generally take place in a position that is eccentric with respect to the longitudinal axis (for example, at an outer circumferential surface of the drive shaft).

The actuator element and in particular a possible second section thereof may extend, at least in sections, along an outer circumference of the drive shaft. In other words, the actuator element (and/or its second section), at least in sections, may be wound around the drive shaft and/or rest against its outer circumferential surface. Extension along the outer circumference may be understood in particular to mean an extension in the circumferential direction (and/or about the rotational axis). The extent of the winding may correspondingly change according to a rotation of the drive shaft. In contrast, the first section (at least in a middle position of the rotational drive, explained below) may remain at a distance from the drive shaft and/or extend essentially linearly. In principle, it may be provided that the first section is not wound or windable onto the drive shaft.

If two actuator elements are provided to bring about rotations of the drive shaft in opposite directions, as described below, the actuator elements (and/or their respective second sections) may be wound or windable oppositely, or stated in another way, with opposite circumferential directions, onto the drive shaft (for example, one in the clockwise direction and the other in the counterclockwise direction). In other words, the actuator elements (and/or their respective second sections) may have different directions of action as a result of their different winding directions. The circumferential or winding direction may be regarded as extending from a particular coupling point between the first and second sections toward a second end section, or conversely. Likewise, the circumferential or winding direction may be regarded as extending from a first end section of the actuator element toward a second end section.

The rotational drive also includes a stop at each end position for limiting the rotation of the drive shaft in a predetermined direction. The stop is a stationary element that prevents rotation of the drive shaft beyond a certain point. In general, the stop limits the extent of the rotational motion of the drive shaft in a predetermined direction, and thus establishes an end position or maximum rotational position of the drive shaft. Two stops are provided in order to limit a rotation of the drive shaft, relative to a middle position, about the rotational axis in both rotational directions. Mentioned as an example is a limitation of the magnitude of rotation, from the middle position in a particular direction, to approximately 20° to approximately 120°, for example approximately 75°. The drive shaft (and/or the satellite component) may include a protrusion, a pin, or some other suitable interaction region for interaction with the stop. Such elements may be situated at an end face of the drive shaft.

The rotational drive includes a reset device that is designed for generating restoring forces, which are changeable according to a rotation of the drive shaft. The restoring forces may generally act against a deformation experienced by the reset device during rotation of the drive shaft. Consequently, the restoring forces may act in or also against the direction of rotation (or generate correspondingly acting torques); this may vary, depending on the rotational position of the drive shaft.

The reset device may include a spring element, for example a metallic spring (in particular a coil spring). The spring element may be designed as a tension spring or compression spring. The reset device and in particular a possible spring element thereof may be coupled to the drive shaft in an eccentric position relative to the rotational axis. In other words, the reset device may be coupled to the drive shaft in a position at a distance from the rotational axis (for example, directly fastened thereto). As explained in greater detail below, a deformation state of the reset device may correspondingly vary, depending on the rotation of the drive shaft.

The rotational drive also includes a second actuator element, the first actuator element being designed for rotating the drive shaft about the rotational axis in a first rotational direction, and the second actuator element being designed for rotating the drive shaft about the rotational axis in a second rotational direction, wherein the first direction and the second direction are opposite to one another. In other words, the drive shaft is rotatable about the rotational axis in both directions, a separate actuator element being provided for each rotational direction. In principle, the second actuator element may have a design that is identical to the first actuator element. In other words, any of the aspects explained above or below with regard to the first actuator element may likewise be provided for the second actuator element. In particular, both the first and the second actuator element may include a second section, as explained above, which extends along the outer circumference of the drive shaft. These second sections are preferably wound or windable onto the drive shaft in opposite circumferential directions.

At a higher level, the first and second actuator elements may be situated on different radial levels relative to the rotational axis. This may concern, for example, at least the first section explained above and/or a corresponding first end section of the actuator elements, which may be radially spaced apart from one another. In addition, the actuator elements and in particular the first and/or second sections thereof may extend at an angle with respect to the rotational axis, for example essentially orthogonally thereto.

The first and second actuator elements may be elastically deformable, in particular in such a way that a heat-related change in length of one of the actuator elements results in an essentially converse elastic change in length of the other actuator element. For example, one of the actuator elements may become shorter due to heating, while the other actuator element is elastically stretched. The elastic restoring forces thus generated may assist with the shortening of the initially elastically stretched actuator element upon subsequent heating. In principle, the return of an actuator element to its unheated starting state may also be assisted by a possible reset device of the rotational drive. This is explained in greater detail below.

One refinement provides that the first and second actuator elements are situated on the same side of a plane containing the rotational axis. The plane may generally be a virtual plane. The plane, at least in a middle position of the rotational drive, may include a coupling or fastening position for a possible reset device on the drive shaft. In addition, the actuator elements or at least possible first sections thereof may extend at an angle with respect to the plane, for example essentially orthogonally thereto.

The stops provided for limiting the drive shaft rotation nay be situated on both sides of the plane (i.e., on different sides of the plane).

Furthermore, the rotational drive has a first end position and a second end position as well as a middle position in between, the first and second end positions in each case being fixed by a stop according to one of the above aspects. Starting from the middle position, the drive shaft may be rotatable, preferably in equal angular increments in opposite first and second rotational directions, until the respective first and second end positions are reached. This may take place via appropriate heating or activation of one of the actuator elements. The middle position may thus also be referred to as the dead center, inflection point, or zero position.

The end positions may define maximum actuating positions of the rotational drive. Additionally or alternatively, the end positions may define permanently assumable and/or stable positions, or stated in another way, may define switching positions of the rotational drive. These may be the only permanently assumable positions of the rotational drive during normal operation. In other words, a binary switch may be made back and forth between the first and the second end position, whereas all positions in between, including the middle position, are only temporarily run through during a change between the first and the second end position. The change between the first and the second end position (and conversely) may be achieved by activating the actuator elements in alternation. The rotational drive may thus generally have a bistable design, in which the stable positions are defined in each case by one of the end positions.

In this regard, it may also be provided that the restoring forces of the reset device assume a maximum value in the middle position, and/or that at least a minimum level of restoring forces is still provided upon reaching the first or second end position. In other words, the reset device may be maximally deformed in the middle position. On the other hand, the reset device may generally be designed for bringing about essentially no rotation of the drive shaft in the middle position, for example due to the fact that the restoring forces intersect the rotational axis or, stated in another way, the restoring forces have no rotationally active lever arm. However, as soon as the middle position is passed through, the restoring forces may provide a torque about the rotational axis.

Additionally, the restoring forces may be maintained, at least at a predetermined minimum level, upon reaching the first and/or second end position. For example, the restoring forces may be dimensioned in such a way that they are able to hold the drive shaft in the corresponding end position, against all other restoring forces. This may be provided in particular in a de-energized state of the rotational drive and/or when no heating of one of the actuator elements takes place. In contrast, the restoring forces of the reset device acting in the end positions may be overcome due to heating of the actuator elements, in order to bring about a rotation of the drive shaft directed away from the corresponding stop.

At a higher level, the reset device may thus be designed for holding the drive shaft stable in its end positions in a de-energized state. This may also apply with respect to external vibrations or the like.

When the drive shaft is deflected from the middle position in the first or second rotational direction, the restoring forces of the reset device may generate a torque that acts in this rotational direction. In other words, during a rotation of the drive shaft generated via the actuator elements, the restoring forces of the reset device may provide torques that additionally assist with a rotation in question. As mentioned, the restoring forces in the middle position, in contrast, are not able to provide a corresponding torque.

Lastly, one refinement provides that the rotational drive includes a heating unit for the at least one actuator element. The heating unit may be selectively activatable in order to bring about the above-explained temperature-activated change in length of the actuator element. If a plurality of actuator elements is provided, an individually controllable heating unit may be provided for each actuator element in order to independently heat the actuator elements. The heating unit may bring about heating of the actuator elements (or at least of a second section thereof) by introducing or passing through an electrical current. Additionally or alternatively, the heating unit may include some other suitable heat source that is preferably selectively activatable. In principle, a cooling device (and/or one cooling device for each actuator element) for cooling the at least one actuator element may also be provided. However, the cooling preferably takes place passively (by radiative effects, for example).

The invention further relates to a method according to claim 10, for rotationally driving a satellite component, in particular by means of a rotational drive according to one of the above aspects, comprising the steps:
- coupling at least a first and a second actuator element that includes a shape memory material to a drive shaft, the drive shaft being coupled to a satellite component;
- heating the first and the second actuator element so that its length changes according to the heating level, and rotates the drive shaft over the length in a predetermined direction.

The method may include any additional steps in order to provide all of the effects and/or operating states of the rotational drive stated above or described below. For example, the change in length of the actuator element in the above-described manner may encompass a shortening of same. The coupling of the actuator elements may in each case include the described winding, by sections, of a second section thereof onto the drive shaft.

The present disclosure is explained in greater detail with reference to the figures, which show the following in a schematic manner:
- Figure 1: shows a schematic diagram of a rotational drive according to the invention, according to a first embodiment;
- Figure 2: shows a partial view of the illustration from Figure 1, in which the drive shaft is in a first end position;
- Figure 3: shows a partial view of the illustration from Figure 2, in which the drive shaft is in a second end position;
- Figure 4: shows a detailed view of a reset device in the embodiment from Figure 1; and
- Figure 5: shows a detailed view of a reset device according to an alternative embodiment.

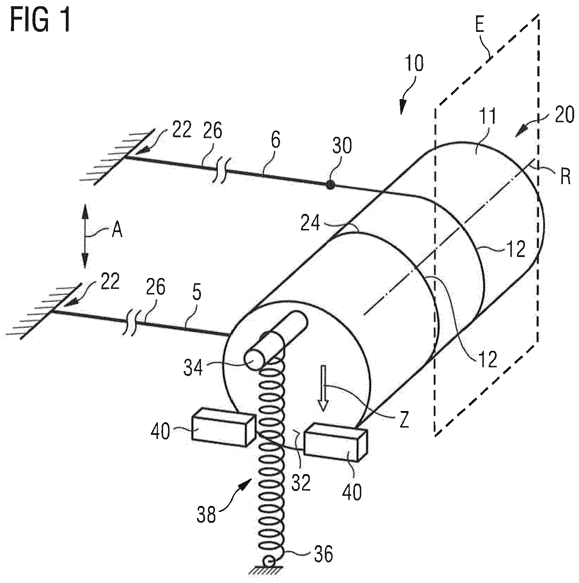

A schematic diagram of a rotational drive 10 according to a first embodiment of the invention is shown in Figure 1. The rotational drive 10 includes a cylindrical drive shaft 11. The drive shaft extends along a rotational axis R that coincides with a longitudinal axis of the drive shaft 11. The drive shaft 11 is generally rotatable about the rotational axis R in both directions (i.e., in the clockwise and counterclockwise directions in Figure 1).

The drive shaft 11 at a first end face 20, facing away from the observer in Figure 1, is coupled to a satellite component, not illustrated. This satellite component is the closure flap of an optical aerospace instrument that is openable and closeable according to a rotation of the drive shaft. However, it may also be provided to connect the flap to the other end face 32 or to the coupling pin 34, explained below.

The rotational drive 10 also includes a first actuator element 5 (in the lower part of Figure 1) and a second actuator element 6 (in the upper part of Figure 1). The first and second actuator elements 5, 6 are each designed as elongated elements that include sections containing various materials. More precisely, the first and second actuator elements 5, 6 each include a first end section 22 that is coupled to a stationary element of the rotational drive 10. A type of fixed bearing is formed in this way. The stationary element may be a housing wall. In addition, the actuator elements 5, 6 each include a second end section 24 situated opposite from the respective first end section 22. This second end section 24 is fastened to an outer circumferential surface of the drive shaft 11, and is situated eccentrically with respect to the rotational axis R. In the view in Figure 1, only the end section 24 of the lower actuator element 5 is discernible.

In addition, the first and second actuator elements 5, 6 each include a first and second section 26, 12. These sections extend essentially in a common virtual plane that runs essentially orthogonally with respect to the rotational axis R. The first section 26 extends from the first end section 22 to a coupling point 30. At that location the first section 26 is connected to the second section 12, which extends to the second end section 24. As explained in greater detail below, the first section 26 is made of a shape memory material, whereas the second section 12 is made of a string or thread material (cotton or Nylon, for example). Each actuator element 5, 6 is also provided with an electric heating unit, not illustrated, to allow the first section 26 to be selectively heated to a predetermined activation temperature.

It is also apparent in Figure 1 that the first end sections 22 are each situated on the same side of a virtual plane E that encompasses the rotational axis R. At least the first sections 26 of the actuator elements 5 extend at an angle with respect to the plane E, and in particular essentially orthogonally thereto. However, the first end sections 22 and also the first sections 26 of the actuator elements 5, 6 are situated on different radial levels relative to the rotational axis R. This is indicated in Figure 1 by the radial distance A, which extends perpendicularly with respect to the rotational axis R.

It is also apparent that the respective second sections 12 of the actuator elements 5, 6 extend, practically with their entire length, along the outer circumference of the drive shaft 11 and rest against same. More precisely, the second sections 12 are each wound around the outer circumference of the drive shaft 11, but without completely enclosing it. In the embodiment shown, and with reference to the view in Figure 1, the second section 12 of the upper actuator element 6 is wound from top to bottom around the outer circumferential surface of the drive shaft 11. In contrast, the second section 12 of the lower actuator element 5 extends from bottom to top. In other words, starting from the respective coupling point 30 and viewed in the direction of the second end section 24, the second section 12 of the upper actuator element 6 is wound onto the drive shaft 11 in the clockwise direction. In contrast, the second section 26 of the lower actuator element 5 is wound onto the drive shaft 11 in the counterclockwise direction.

It is emphasized that the rotational drive 10 in Figure 1 is shown in a middle position that is assumable only temporarily, and that the extent of the winding and unwinding of the second end sections 12 on the drive shaft 11 may change according to a rotation of the drive shaft 11.

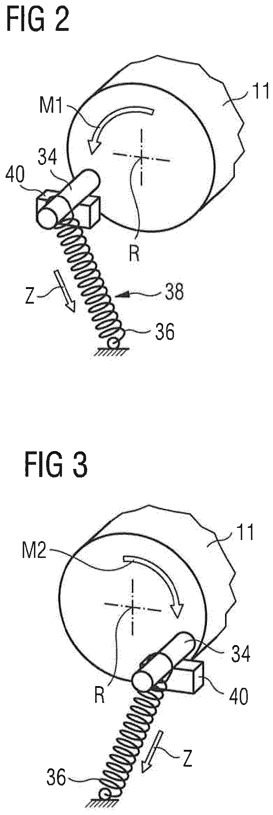

The drive shaft 11 also has a coupling pin 34 at a second end face 32 situated opposite from the first end face 20. The coupling pin is situated at a distance from the rotational axis R, and thus eccentrically with respect to same. In addition, a reset device 36 in the form of a metallic tension coil spring 38 is fastened to the coupling pin 34. The coil spring 38 is deformable according to a rotation of the drive shaft 11, and corresponding restoring forces Z are also generated according to the deformation (also see the following discussion for Figures 2 and 3). In the middle position shown in Figure 1, the coil spring 38 is maximally stretched and thus generates the largest possible tensile or restoring forces Z. However, these forces act within the plane E and intersect the rotational axis R, so that they have no torque-effective lever arm. As a result, the reset device 36 in the shown middle position exerts no rotationally-active forces on the drive shaft 11.

Lastly, the rotational drive 10 includes two stationary (i.e., not rotating together with the drive shaft 11) stops 40. The stops are situated on each side of the plane E, and limit a rotation of the drive shaft 11 in different directions, in particular relative to the middle position. More precisely, and with reference to the illustration in Figure 1, the left stop 40 limits a rotational motion of the drive shaft 11 in the counterclockwise direction, and the right stop 40 limits a rotational motion of the drive shaft 11 in the clockwise direction. The rotation is limited in each case by the coupling pin 34 coming into contact with the corresponding stop 40. The stops 40 in each case thus specify a defined end position or, stated in another way, specify a maximum rotational motion of the drive shaft 11 about the rotational axis R in one of the two rotational directions.

Operation of the rotational drive 10 is explained below with additional reference to Figures 2 and 3. To bring about a rotation of the drive shaft 11, one of the heating units, not illustrated, of the actuator element 5, 6 is activated, while the heating unit of the corresponding other actuator element 5, 6 remains in a deactivated state. By heating the corresponding actuator element 5, 6, an activation temperature is reached at which the second section 26, which includes the shape memory material, returns to its undeformed starting state. In the case shown, the shape memory material of the second section 26 has been pseudoplastically stretched, so that it once again contracts when the activation temperature is exceeded. A shortening of the length of the second section 26 by up to 3% is mentioned as an example. As a result, the first section 26 exerts a tensile force on the second section 12 of the corresponding actuator element 5, 6. A torque is subsequently exerted on the drive shaft 11 due to the eccentric fastening of the second end sections 24 to the drive shaft 11.

With reference to Figure 1, this means that the upper actuator element 6 generates a torque in the counterclockwise direction upon shortening, whereas the lower actuator element 5 generates a torque in the clockwise direction.

The respective other actuator element 5, 6, whose heating unit is not activated, in this respect is elastically deformed. This relates in particular (and in the case shown, exclusively) to the respective first sections 26 of the actuator elements 5, 6. In the case shown, the unheated first sections 26 are elastically stretched due to a temperature-activated shortening of the respective other actuator elements 5, 6, in particular, likewise by an essentially equal amount (3%, for example). At the same time, a rotation of the drive shaft 11 is accompanied by a change in the deformation state of the reset device 36, as explained in greater detail below.

A typical sequence is explained below, starting with Figure 2. In Figure 2 the drive shaft 11 has been rotated to a first end position in which the coupling pin 34 rests against the left stop 40 (the right stop 40 is not shown in Figure 2 for purposes of illustration). In this first end position, the closure flap coupled to the drive shaft 11 assumes a first maximum position (for example, a completely closed position). In addition, in the position in Figure 2 the upper actuator element 6 assumes a (temperature-activated) shortened state, whereas the lower actuator element 5 is elastically stretched or lengthened by essentially the same amount.

The coil spring 36 of the reset device 38 is not yet completely relaxed in this state. Accordingly, the coil spring exerts a tensile or restoring force according to the arrow Z. This results in a torque M1 which pushes or pulls the coupling pin 34 into contact with the stop 40. With reference to Figure 1, this means that as soon as the drive shaft 11 is rotated from the middle position in the counterclockwise direction, the tensile forces Z of the reset device 38 generate a torque M1 that assists with this rotation.

It is noted that the elastic forces of the reset device 38 are selected in such a way that, even in a de-energized state of the drive unit 10 and/or with a deactivated heating device of the upper actuator element 6, the forces are sufficient to hold the drive shaft 11 in the end position shown in Figure 2, against all other elastic restoring forces. In this state, in particular the elastic restoring forces of the lower actuator element 5, but also the restoring forces due to the slight development of elastic recovery during cooling of the upper actuator element 6, act. The latter occurs in a known manner due to so-called hysteresis effects of the shape memory material.

Starting from the state in Figure 2, the heating unit of the upper actuator element 6 is deactivated (if this has not already happened), and the heating unit of the lower actuator element 5 is switched on. This causes the lower actuator element 5 to become shorter due to the described shape memory effect of the second section 26 of the lower actuator element. The shortening is assisted by the elastic restoring forces of the initially elastically lengthened lower actuator element 5. The coupling section 34 then begins to lift off from the left stop 40, and together with the drive shaft 11, to rotate about the rotational axis R in a direction facing away from this stop 40. This causes the upper actuator element 6 to be increasingly elastically lengthened. The rotation is also accompanied by increased elongation of the coil spring 36 until the middle position shown in Figure 1 is reached. As a result, the coil spring 36 also initially generates a torque that acts opposite the rotation.

The coil spring 36 experiences its maximum elongation in the middle position. However, the resulting tensile or restoring forces Z intersect the rotational axis R, and thus, at least temporarily, exert no torque on the drive shaft 11. Since the lower actuator element 5 also further shortens beyond the middle position, however, the drive shaft 11 continues to rotate in the direction of the right stop 40. Upon moving past the middle position, this is in turn assisted by a torque M2 that is generated via the coil spring 36 (see Figure 3), since the tensile or restoring forces Z of the coil spring 36 once again extend at a corresponding distance from the rotational axis R.

When the coupling pin 34 according to Figure 3 has reached the right stop 40, the heating unit of the lower actuator element 5 is switched off. The rotational drive 10 is thus in its second end position, in which the closure flap assumes a second maximum position (completely open, for example). In this state, the upper actuator element 6 is maximally elastically lengthened or stretched, and the lower actuator element 5 is maximally shortened. However, analogously to the end position according to Figure 2, restoring forces Z of the coil spring 36 still act on the drive shaft 11. As a result, a torque M2 is at least partially maintained, and holds the coupling pin 34 in the end position according to Figure 3, against all other restoring forces.

The described operation may also be correspondingly reversed and repeated multiple times. Starting from Figure 3, for this purpose the upper actuator element 6 is heated by means of the corresponding heating device, which causes the upper actuator element to begin to shorten. The coupling pin 34 is then lifted off from the right end stop 40, and together with the drive shaft 11 rotates about the rotational axis R in the counterclockwise direction. Analogously to the above description, this is accompanied by an elastic lengthening of the lower actuator element 5 and increased elongation of the coil spring 36. The latter initially results in a torque that acts opposite the rotation. However, upon moving past the middle position in Figure 1, the coil spring 36 exerts a torque M1 that assists with the rotation until the coupling pin 34 once again reaches the left stop 40. In this state the upper actuator element 6 is maximally shortened, and the lower actuator element 5 is maximally elastically lengthened or stretched.

The rotational drive 10 may thus be selectively moved back and forth between the end positions in Figures 2 and 3 in the above-described manner. The end positions are therefore permanently assumable switching positions of the rotational drive 10, wherein positions in between are only temporarily run through. As a result, the closure flap may also be selectively switched back and forth between its maximum positions (completely open or completely closed).

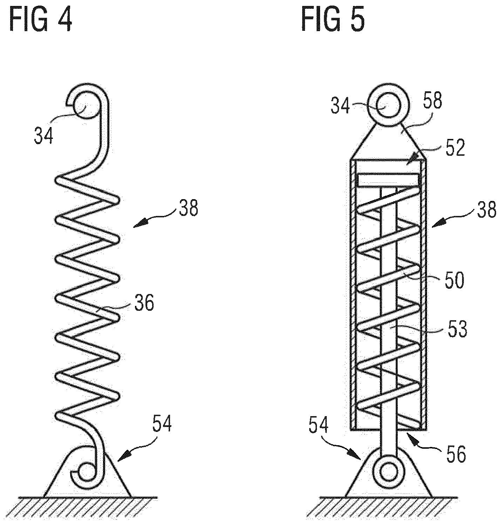

Various embodiments of the reset device 38 are shown in Figures 4 and 5, with functionally equivalent or similar features being denoted by the same reference numerals. Figure 4 shows the reset device 38 according to the exemplary embodiment in Figures 1 through 3, which includes a tension spring 36. At a first upper end the tension spring 36 is coupled in the described manner to the coupling pin 34 of the drive shaft 10, not illustrated in greater detail. An oppositely situated second end is rotatably supported on some other stationary surrounding area 54, for example on a housing wall.

Figure 5 shows an alternative embodiment of the reset device 38, which includes a compression coil spring 50. A first end 52 of this compression coil spring 50 is affixed to a pin 53 that is rotatably coupled to some other stationary surrounding area 54. In contrast, an oppositely situated second end 56 of the compression coil spring 50 is supported on a compression sleeve 58 which is displaceable along the pin 53 (in Figure 5, vertically up and down). The compression sleeve 58 is rotatably coupled to the coupling pin 34 of the drive shaft 11, not illustrated. The compression sleeve 58 is thus moved by a different extent along the pin 53 due to a rotation of the coupling pin 34, so that a distance between the ends 54, 56 of the compression coil spring 50, and consequently its compression state, correspondingly changes.

It is noted that in this embodiment as well, it is provided that the compression coil spring 50 experiences maximum compression when it assumes the middle position. In this case, the compression sleeve 58 is maximally displaced relative to the pin 53, or maximally lifted off from the surrounding area 54. This state is schematically shown in Figure 5. Analogously to the exemplary embodiment above, when the coupling pin 34 moves in the direction of one of the stops 40 (not shown in Figure 5), this causes relaxation of the compression coil spring 50 to develop; however, the compression coil spring can maintain a minimum level of restoring forces Z to be able to securely hold the coupling pin 34 in contact with the corresponding stop 40. This is accompanied by a corresponding displacement of the compression sleeve 50 along the pin 53, downwardly in Figure 5, even though the purely schematic illustration in Figure 5 suggests a comparatively small range of movement in this direction.

## Claims

1. A rotational drive (10) for a satellite component, comprising:
- a drive shaft (11) which is rotatable about a rotational axis (R) and which is coupleable to a satellite component; and
- at least one first actuator element (5, 6) that is coupled to the drive shaft (11), wherein the rotational drive (10) includes a second actuator element (5, 6), the first actuator element (5, 6) being designed for rotating the drive shaft (11) about the rotational axis (R) in a first rotational direction, and the second actuator element (5, 6) being designed for rotating the drive shaft (11) about the rotational axis (R) in a second rotational direction, wherein the first direction and the second direction are opposite to one another, wherein the first and the second actuator elements (5, 6) include a shape memory material and are designed to rotate the drive shaft (11) about the rotational axis (R) according to a heating level of the shape memory material, wherein the rotational drive (10) includes a reset device (38) that is designed for generating restoring forces (Z), which are changeable according to a rotation of the drive shaft (R), wherein the rotational drive (10) has a first end position and a second end position as well as a middle position in between, the first and second end positions in each case being fixed by a stop (40) that is configured for limiting the rotation of the drive shaft (11) in a predetermined direction, wherein the stop (40) is a stationary element that prevents rotation of the drive shaft (11) beyond a certain point, wherein each of the first and the second actuator elements (5, 6) is changeable in length according to a heating level of the shape memory material.

2. The rotational drive (10) according to Claim 1,
wherein each actuator element (5, 6) includes a first end section (22) that is coupleable to a further stationary element, and a second end section (24) that is coupled to the drive shaft (11).

3. The rotational drive (10) according to one of the preceding claims,
wherein each actuator element (5, 6) has a first section (26) that includes at least a portion of the shape memory material, and a second section (12) that is coupled to the drive shaft (11), in particular in a position situated at a distance from the rotational axis (R).

4. The rotational drive (10) according to one of the preceding claims,
wherein each actuator element (5, 6) extends, at least in sections, along an outer circumference of the drive shaft (11).

5. The rotational drive (10) according to one of the preceding claims,
wherein the reset device (38) is coupled to the drive shaft (11) in a position situated at a distance from the rotational axis (R).

6. The rotational drive (10) according to one of the preceding claims,
wherein the first and second actuator elements (5, 6) are elastically deformable,
in particular in such a way that a heat-related change in length of one of the actuator elements (5, 6) results in an essentially converse elastic change in length of the other actuator element (5, 6).

7. The rotational drive (10) according to one of the preceding claims,
wherein the first and second actuator elements are situated on the same side of a plane (E) containing the rotational axis (R).

8. The rotational drive (10) according to one of the precedings claims,
wherein the reset device (38) is configured such that the restoring forces (Z) assume a maximum value in the middle position, and/or at least a minimum level of restoring forces (Z) is still provided upon reaching the first or second end position.

9. The rotational drive (10) according to Claim 8,
wherein, in response to a deflection of the drive shaft (11) from the middle position in the first or second rotational direction, the reset device (38) is configured such that the restoring forces (Z) generate a torque that acts in this rotational direction.

10. A method for rotationally driving a satellite component, in particular by means of a rotational drive (10) according to one of the preceding claims, comprising the steps:
- coupling at least a first and a second actuator element (5, 6) that include a shape memory material to a drive shaft (11), the drive shaft (11) being coupled to a satellite component, the first actuator element (5, 6) being designed for rotating the drive shaft (11) about the rotational axis (R) in a first rotational direction, and the second actuator element (5, 6) being designed for rotating the drive shaft (11) about the rotational axis (R) in a second rotational direction, wherein the first direction and the second direction are opposite to one another,;
- heating the first and second actuator elements (5, 6) in such a way that its length changes according to the heating level, and thereby rotates the drive shaft (11) in a predetermined direction, wherein the rotational drive (10) includes a reset device (38) that is designed for generating restoring forces (Z), which are changeable according to a rotation of the drive shaft (R), wherein the rotational drive (10) has a first end position and a second end position as well as a middle position in between, the first and second end positions in each case being fixed by a stop (40) that is configured for limiting the rotation of the drive shaft (11) in a predetermined direction, wherein the stop (40) is a stationary element that prevents rotation of the drive shaft (11) beyond a certain point, wherein each of the first and the second actuator element (5, 6) is changeable in length according to a heating level of the shape memory material.

## Patentansprüche

1. Rotationsantrieb (10) für eine Satellitenkomponente,
umfassend:
- eine Antriebswelle (11), die um eine Rotationsachse (R) rotierbar ist und die mit einer Satellitenkomponente koppelbar ist; und
- wenigstens ein erstes Aktorelement (5, 6), das mit der Antriebswelle (11) gekoppelt ist; wobei der Rotationsantrieb (10) ein zweites Aktorelement (5, 6) umfasst, wobei das erste Aktorelement (5, 6) dazu ausgebildet ist, die Antriebswelle (11) in eine erste Rotationsrichtung um die Rotationsachse (R) zu rotieren, und das zweite Aktorelement (5, 6) dazu ausgebildet ist, die Antriebswelle (11) in eine zweite Rotationsrichtung um die Rotationsachse (R) zu rotieren, wobei die erste und die zweite Richtung zueinander entgegengesetzt sind, wobei das erste und das zweite Aktorelement (5, 6) ein Formgedächtnismaterial umfassen und dazu ausgebildet sind, nach Maßgabe eines Erwärmungsgrades des Formgedächtnismaterials die Antriebswelle (11) um die Rotationsachse (R) zu rotieren, wobei der Rotationsantrieb (10) eine Rückstelleinrichtung (38) umfasst, die dazu ausgebildet ist, Rückstellkräfte (Z) zu erzeugen, die nach Maßgabe einer Rotation der Antriebswelle (R) veränderlich sind, wobei der Rotationsantrieb (10) eine erste und eine zweite Endposition sowie eine dazwischenliegende Mittelstellung aufweist, wobei die erste und die zweite Endposition jeweils durch einen Anschlag (40) festgelegt sind, der dazu eingerichtet ist, die Rotation der Antriebswelle (11) in einer vorbestimmten Richtung zu begrenzen, wobei der Anschlag ein feststehendes Element ist, das eine Rotation der Antriebswelle (11) über einen bestimmten Punkt hinaus verhindert, wobei das erste und das zweite Aktorelement (5, 6) jeweils nach Maßgabe eines Erwärmungsgrades des Formgedächtnismaterials längenveränderlich ist.

2. Rotationsantrieb (10) nach Anspruch 1,
wobei jedes Aktorelement (5, 6) einen ersten Endabschnitt (22) umfasst, der mit einem weiteren feststehenden Element koppelbar ist, und einen zweiten Endabschnitt (24), der mit der Antriebswelle (11) gekoppelt ist.

3. Rotationsantrieb (10) nach einem der vorangehenden Ansprüche,
wobei jedes Aktorelement (5, 6) einen ersten Abschnitt (26), der zumindest einen Anteil des Formgedächtnismaterials umfasst, und einen zweiten Abschnitt (12) aufweist, der mit der Antriebswelle (11) gekoppelt ist, insbesondere in einer von der Rotationsachse (R) beabstandeten Position.

4. Rotationsantrieb (10) nach einem der vorangehenden Ansprüche,
wobei sich jedes Aktorelement (5,6) zumindest abschnittsweise entlang eines Außenumfangs der Antriebswelle (11) erstreckt.

5. Rotationsantrieb (10) nach einem der vorangehenden Ansprüche,
wobei die Rückstelleinrichtung (38) in einer von der Rotationsachse (R) beabstandeten Position mit der Antriebswelle (11) gekoppelt ist.

6. Rotationsantrieb (10) nach einem der vorangehenden Ansprüche,
wobei das erste und das zweite Aktorelement (5, 6) elastisch deformierbar sind, insbesondere derart, dass eine erwärmungsbedingte Längenänderung eines der Aktorelement (5, 6) in einer im Wesentlichen umgekehrten elastischen Längenänderung des jeweils anderen Aktorelements (5, 6) resultiert.

7. Rotationsantrieb (10) nach einem der vorangehenden Ansprüche,
wobei das erste und das zweite Aktorelement auf einer gemeinsamen Seite von einer die Rotationsachse (R) enthaltenen Ebene (E) angeordnet sind.

8. Rotationsantrieb (10) nach einem der vorangehenden Ansprüche,
wobei die Rückstelleinrichtung (38) so konfiguriert ist, dass die Rückstellkräfte (Z) in der Mittelstellung einen Maximalwert annehmen und/oder bei Erreichen der ersten oder de zweiten Endposition zumindest noch ein Mindestmaß an Rückstellkräften (Z) bereitgestellt wird.

9. Rotationsantrieb (10) nach Anspruch 8,
wobei, in Reaktion auf eine Auslenkung der Antriebswelle (11) aus der Mittelstellung in die erste oder die zweite Rotationsrichtung, die Rückstelleinrichtung (38) so konfiguriert ist, dass die Rückstellkräfte (Z) der ein in diese Rotationsrichtung wirkendes Drehmoment erzeugen.

10. Verfahren zum Rotationsantreiben einer Satellitenkomponente, insbesondere mittels eines Rotationsantriebs (10) nach einem der vorangehenden Ansprüche, umfassend die Schritte:
- Koppeln wenigstens eines ersten und eines zweiten Aktorelements (5, 6), das ein Formgedächtnismaterial umfasst, mit einer Antriebswelle (11), wobei die Antriebswelle (11) mit einer Satellitenkomponente gekoppelt ist, wobei das erste Aktorelement (5, 6) dazu ausgebildet ist, die Antriebswelle (11) in eine erste Rotationsrichtung um die Rotationsachse (R) zu rotieren, und das zweite Aktorelement (5, 6) dazu ausgebildet ist, die Antriebswelle (11) in eine zweite Rotationsrichtung um die Rotationsachse (R) zu rotieren, wobei die erste und die zweite Richtung zueinander entgegengesetzt sind;
- Erwärmen des ersten und des zweiten Aktorelements (5, 6) derart, dass sich nach Maßgabe des Erwärmungsgrades ihre Länge ändert und darüber die Antriebswelle (11) in eine vorbestimmte Richtung rotiert, wobei der Rotationsantrieb (10) eine Rückstelleinrichtung (38) umfasst, die dazu ausgebildet ist, Rückstellkräfte (Z) zu erzeugen, die nach Maßgabe einer Rotation der Antriebswelle (R) veränderlich sind, wobei der Rotationsantrieb (10) eine erste und eine zweite Endposition sowie eine dazwischenliegende Mittelstellung aufweist, wobei die erste und die zweite Endposition jeweils durch einen Anschlag (40) festgelegt sind, der dazu eingerichtet ist, die Rotation der Antriebswelle (11) in einer vorbestimmten Richtung zu begrenzen, wobei der Anschlag ein feststehendes Element ist, das eine Rotation der Antriebswelle (11) über einen bestimmten Punkt hinaus verhindert, wobei das erste und das zweite Aktorelement (5, 6) jeweils nach Maßgabe eines Erwärmungsgrades des Formgedächtnismaterials längenveränderlich ist.

## Revendications

1. Entraînement rotatif (10) pour un composant de satellite, comprenant :
- un arbre d'entraînement (11) qui est rotatif autour d'un axe de rotation (R) et qui peut être couplé à un composant de satellite ; et
- au moins un premier élément actionneur (5, 6) qui est couplé à l'arbre d'entraînement (11), dans lequel l'entraînement rotatif (10) inclut un deuxième élément actionneur (5, 6), le premier élément actionneur (5, 6) étant conçu pour faire tourner l'arbre d'entraînement (11) autour de l'axe de rotation (R) dans un premier sens de rotation, et le deuxième élément actionneur (5, 6) étant conçu pour faire tourner l'arbre d'entraînement (11) autour de l'axe de rotation (R) dans un deuxième sens de rotation, dans lequel le premier sens et le deuxième sens sont opposés l'un à l'autre, dans lequel les premier et deuxième éléments actionneurs (5, 6) incluent un matériau à mémoire de forme et sont conçus pour faire tourner l'arbre d'entraînement (11) autour de l'axe de rotation (R) en fonction d'un niveau de chauffage du matériau à mémoire de forme, dans lequel l'entraînement rotatif (10) inclut un dispositif de réinitialisation (38) qui est conçu pour générer des forces de restauration (Z), qui sont changeables en fonction d'une rotation de l'arbre d'entraînement (R), dans lequel l'entraînement rotatif (10) a une première position d'extrémité et une deuxième position d'extrémité ainsi qu'une position médiane entre celles-ci, les première et deuxième positions d'extrémité étant dans chaque cas fixées par une butée d'arrêt (40) qui est configurée pour limiter la rotation de l'arbre d'entraînement (11) dans un sens prédéterminé, dans lequel la butée d'arrêt (40) est un élément stationnaire qui empêche une rotation de l'arbre d'entraînement (11) au-delà d'un certain point, dans lequel chacun des premier et deuxième éléments actionneurs (5, 6) est changeable en longueur en fonction d'un niveau de chauffage du matériau à mémoire de forme.

2. Entraînement rotatif (10) selon la revendication 1,
dans lequel chaque élément actionneur (5, 6) inclut une première section d'extrémité (22) qui peut être couplée à un autre élément stationnaire, et une deuxième section d'extrémité (24) qui est couplée à l'arbre d'entraînement (11).

3. Entraînement rotatif (10) selon l'une des revendications précédentes,
dans lequel chaque élément actionneur (5, 6) a une première section (26) qui inclut au moins une partie du matériau à mémoire de forme, et une deuxième section (12) qui est couplée à l'arbre d'entraînement (11), en particulier dans une position située à une certaine distance de l'axe de rotation (R).

4. Entraînement rotatif (10) selon l'une des revendications précédentes,
dans lequel chaque élément actionneur (5, 6) s'étend, au moins en sections, le long d'une circonférence extérieure de l'arbre d'entraînement (11).

5. Entraînement rotatif (10) selon l'une des revendications précédentes,
dans lequel le dispositif de réinitialisation (38) est couplé à l'arbre d'entraînement (11) dans une position située à une certaine distance de l'axe de rotation (R).

6. Entraînement rotatif (10) selon l'une des revendications précédentes,
dans lequel les premier et deuxième éléments actionneurs (5, 6) sont élastiquement déformables, en particulier de telle manière qu'un changement de longueur relatif à la chaleur de l'un des éléments actionneurs (5, 6) résulte en un changement élastique sensiblement inverse de longueur de l'autre élément actionneur (5, 6).

7. Entraînement rotatif (10) selon l'une des revendications précédentes,
dans lequel les premier et deuxième éléments actionneurs sont situés sur le même côté d'un plan (E) contenant l'axe de rotation (R).

8. Entraînement rotatif (10) selon l'une des revendications précédentes,
dans lequel le dispositif de réinitialisation (38) est configuré de telle manière que les forces de restauration (Z) prennent une valeur maximum dans la position médiane, et/ou au moins un niveau minimum de forces de restauration (Z) reste fourni à l'atteinte de la première ou de la deuxième position d'extrémité.

9. Entraînement rotatif (10) selon la revendication 8,
dans lequel, en réponse à une déviation de l'arbre d'entraînement (11) par rapport à la position médiane dans le premier ou le deuxième sens de rotation, le dispositif de réinitialisation (38) est configuré de telle manière que les forces de restauration (Z) génèrent un couple qui agit dans ce sens de rotation.

10. Procédé d'entraînement en rotation d'un élément de satellite, en particulier au moyen d'un entraînement rotatif (10) selon l'une des revendications précédentes, comprenant les étapes de :
- couplage d'au moins un premier et un deuxième élément actionneur (5, 6) qui incluent un matériau à mémoire de forme à un arbre d'entraînement (11), l'arbre d'entraînement (11) étant couplé à un composant de satellite, le premier élément actionneur (5, 6) étant conçu pour faire tourner l'arbre d'entraînement (11) autour de l'axe de rotation (R) dans un premier sens de rotation, et le deuxième élément actionneur (5, 6) étant conçu pour faire tourner l'arbre d'entraînement (11) autour de l'axe de rotation (R) dans un deuxième sens de rotation, dans lequel le premier sens et le deuxième sens sont opposés l'un à l'autre ;
- chauffage des premier et deuxième éléments actionneurs (5, 6) de telle manière que sa longueur change en fonction du niveau de chauffage, et fait ainsi tourner l'arbre d'entraînement (11) dans un sens prédéterminé, dans lequel l'entraînement rotatif (10) inclut un dispositif de réinitialisation (38) qui est conçu pour générer des forces de restauration (Z), qui sont changeables en fonction d'une rotation de l'arbre d'entraînement (R), dans lequel l'entraînement rotatif (10) a une première position d'extrémité et une deuxième position d'extrémité ainsi qu'une position médiane entre celles-ci, les première et deuxième positions d'extrémité étant dans chaque cas fixées par une butée d'arrêt (40) qui est configurée pour limiter la rotation de l'arbre d'entraînement (11) dans un sens prédéterminé, dans lequel la butée d'arrêt (40) est un élément stationnaire qui empêche une rotation de l'arbre d'entraînement (11) au-delà d'un certain point, dans lequel chacun des premier et deuxième éléments actionneurs (5, 6) est changeable en longueur en fonction d'un niveau de chauffage du matériau à mémoire de forme.
